# EUROPÄISCHE PATENTSCHRIFT

(11) **EP 2 899 506 B1**
(45) Veröffentlichungstag und Bekanntmachung des Hinweises auf die Patenterteilung: **11.07.2018**
(21) Anmeldenummer: 14193988.4
(22) Anmeldetag: 20.11.2014
(51) Int. Cl.: G01C 21/36, G02B 27/01, G09B 29/10

(54) **Verfahren und Vorrichtung zum Betreiben eines Sichtfeldanzeigegeräts**
Method and device for operating a view field display device
Procédé et dispositif de fonctionnement d'un appareil d'affichage de champ de vision

(30) Priorität: 13.01.2014 DE 102014200407
(43) Veröffentlichungstag der Anmeldung: 29.07.2015
(73) Patentinhaber: ROBERT BOSCH GMBH, 70442 Stuttgart (DE)
(72) Erfinder: Yang, Yiwen, 31141 Hildesheim (DE); Mueller-Frahm, Mario, 30519 Hannover (DE); Modler, Holger, 31139 Hildesheim (DE); de Boer, Gerrit, 31137 Hildesheim (DE)

(56) Entgegenhaltungen:
- EP-A1- 2 028 447
- US-A1- 2012 249 589
- US-A1- 2012 268 351

## Beschreibung

### Stand der Technik

Die vorliegende Erfindung bezieht sich auf ein Verfahren zum Betreiben eines Sichtfeldanzeigegeräts für ein Fahrzeug, auf eine entsprechende Vorrichtung sowie auf ein entsprechendes Computerprogrammprodukt.

Navigationsinformationen können einem Fahrer eines Fahrzeugs in sein Sichtfeld eingeblendet werden. Dazu kann ein Head-up-Display verwendet werden.

Die DE 100 37 573 A1 beschreibt ein Navigationsverfahren in einem Kraftfahrzeug.

Aus der US 2012/0268351 A1 ist eine Anzeigevorrichtung bekannt, aufweisend eine Bilddaten-Erzeugungseinheit, welche konfiguriert ist Bilddaten zu generieren sowie eine Bildprojektionseinheit, welche konfiguriert ist einen Lichtfluss zu projizieren, einschließlich eines Bildes in Richtung eines Menschen, welcher in einem Fahrzeug fährt. Das Bild basiert auf den Bilddaten. Die Bilddaten-Erzeugungseinheit ist konfiguriert, die Bilddaten in Bezug auf das Bild zu generieren, einschließlich eines ersten Anzeigeobjekts, das eine Fahrtrichtung des Fahrzeugs an einem Fahrtrichtungswechsel Punkt anzeigt, wenn ein Abstand zwischen dem Fahrtrichtungswechsel Punkt und dem Fahrzeug ein erster Abstand ist. Die Bilddaten-Erzeugungseinheit ist konfiguriert, die Bilddaten in Bezug auf das Bild zu generieren, einschließlich eines zweiten Anzeigeobjekts entsprechend der Position des Fahrtrichtungswechsel Punktes, welches angezeigt wird, wenn der Abstand ein zweiter Abstand kürzer als der erste Abstand ist.

Aus der US 2012/249589 A1 ist ein Verfahren zur Ausgabe von grafischen Fahrhinweisen zur Unterstützung des Fahrers eines Kraftfahrzeugs bei der Durchführung eines Fahrmanövers bekannt, bei dem die grafischen Fahrhinweise durch ein bei dem Kraftfahrzeug vorgesehenes Head-up Display ausgegeben werden. Es werden nacheinander die nachfolgenden Schritte durchgeführt:
- Ausgabe eines ersten grafischen Fahrhinweises in Gestalt eines Fahrstreifenwechselhinweises, welcher dem Fahrer die Richtung von einem zu Manöverbeginn befahrenen Fahrstreifen zu einem Soll-Fahrstreifen weist,
- Ausgabe eines zweiten grafischen Fahrhinweises in Gestalt einer kontaktanalogen Fahrstreifenmarkierung, welche den Soll-Fahrstreifen grafisch gegenüber anderen Fahrstreifen hervorhebt,
- Ausgabe eines dritten grafischen Fahrhinweises in Gestalt eines kontaktanalogen Manöverimpulses, welcher einen vom Soll-Fahrstreifen ausgehenden und dem Fahrmanöver entsprechenden Fahrschlauch umfasst,
- Ausgabe eines vierten grafischen Fahrhinweises in Gestalt eines symbolischen Manöverdarstellungshinweises, welcher das begonnene Fahrmanöver nach Eintritt des Fahrzeugs in den Fahrschlauch symbolisch anzeigt.

### Offenbarung der Erfindung

Vor diesem Hintergrund wird mit dem hier vorgestellten Ansatz ein Verfahren zum Betreiben eines Sichtfeldanzeigegeräts für ein Fahrzeug, weiterhin eine Vorrichtung, die dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Bilder von Navigationsinformationen können so in ein Sichtfeld eines Fahrers eines Fahrzeugs eingeblendet werden, dass die Bilder Objekten in dem Sichtfeld überlagert sind. Dabei können die Bilder dynamisch nachgeführt werden, damit die Bilder anscheinend an den Objekten fixiert sind. Diese Darstellung kann kontaktanalog bezeichnet werden.

Wenn bei fahrendem Fahrzeug eine Entfernung zu einem, mit einem Bild überlagerten Objekt kleiner als ein Grenzwert wird, kann das Bild von dem Objekt gelöst werden und in einem vorbestimmten Platz des Sichtfelds statisch platziert werden.

Durch das bedingte Lösen des Bilds vom Objekt kann das Bild weiter im Sichtfeld gehalten werden, obwohl das Objekt durch beispielsweise eine Fahrzeugeigenbewegung aus dem Sichtfeld verschwindet. Die durch das Bild repräsentierte Navigationsinformation kann so auch während eines Fahrmanövers, in dem das Objekt unsichtbar ist, für den Fahrer bereitgestellt werden.

Es wird ein Verfahren zum Betreiben eines Sichtfeldanzeigegeräts für ein Fahrzeug, wobei das Verfahren die folgenden Schritte aufweist:
Ermitteln einer Distanz zwischen dem Fahrzeug und einem Ort zum Darstellen einer Navigationsinformation in einem Umfeld des Fahrzeugs;
Erzeugen einer Bildinformation für das Sichtfeldanzeigegerät unter Verwendung der Navigationsinformation und der Distanz, wobei die Navigationsinformation in der Bildinformation kontaktanalog repräsentiert wird, wenn die Distanz kleiner als eine erste Distanzschwelle wird, und die Navigationsinformation in der Bildinformation winkelanalog repräsentiert wird, wenn die Distanz kleiner als eine zweite Distanzschwelle wird,
wobei bei der kontaktanalogen Darstellung die Navigationsinformation entsprechend dem Ort zum Darstellen der Navigationsinformation nachgeführt wird, sodass die Bildinformation für einen Fahrer des Fahrzeugs ein fester Bestandteil des Umfelds des Fahrzeugs ist und bei der winkelanalogen Darstellung die Navigationsinformation an einer vordefinierten Position in einem Darstellungsbereich des Sichtfeldanzeigegerätes angeordnet ist, und
die Navigationsinformation in der Bildinformation aus dem Sichtfeldanzeigegerät entfernt wird, wenn die Distanz größer als eine dritte Distanzschwelle wird,
wobei die erste Distanzschwelle größer als die dritte Distanzschwelle ist, und die dritte Distanzschwelle größer als die zweite Distanzschwelle ist; und Bereitstellen der Bildinformation für das Sichtfeldanzeigegerät.

Unter einem Sichtfeldanzeigegerät kann ein Head up Display verstanden werden. Eine Navigationsinformation kann eine Information für einen Fahrer eines Fahrzeugs sein. Die Navigationsinformation kann über eine Schnittstelle beispielsweise von einem Navigationsgerät oder einem anderen Fahrerassistenzsystem eingelesen werden. Beispielsweise kann die Navigationsinformation ein Abbiegehinweis, eine Geschwindigkeitswarnung oder eine Abstandswarnung zu einem vorausfahrenden Fahrzeug sein.

Unter einer winkelanalogen Darstellung kann eine Darstellung verstanden werden, bei der eine angezeigte Information für den Fahrer als statische Information in etwa auf einer sich über der Motorhaube erstreckenden vertikalen Ebene erscheint. Eine solche Information kann für den Fahrer so erscheinen, wie wenn sie sich mit dem Fahrzeug mit bewegt, also im Gegensatz zur kontaktanalogen Darstellung, nicht als Bestandteil der Umgebung erscheinen.

Ein Ort zum Darstellen kann ein Objekt oder ein Areal in einem Umfeld des Fahrzeugs sein. Der Ort kann einen räumlichen Bezug zu der Navigationsinformation aufweisen. Beispielsweise kann ein Abbiegehinweis auf eine Straßenkreuzung oder Einmündung bezogen sein. Eine Distanz kann eine direkte Entfernung zwischen dem Fahrzeug und dem Ort sein. Eine Bildinformation kann eine grafische Repräsentation der Navigationsinformation sein. Insbesondere kann die Bildinformation zumindest ein Symbol umfassen. Eine kontaktanaloge Darstellung der Bildinformation kann dem Fahrer so in seine aktuelle Sicht eingeblendet werden, dass das Gefühl hervorgerufen wird, die Bildinformation sei ein fester Bestandteil des Umfelds des Fahrzeugs. Eine winkelanaloge Darstellung der Bildinformation kann sich im Blickfeld des Fahrers immer an derselben Stelle befinden. Die Bildinformation kann als Bildsignal über eine Schnittstelle bereitgestellt werden.

Die Navigationsinformation wird in der Bildinformation nicht mehr repräsentiert, wenn die Distanz größer als eine dritte Distanzschwelle wird. Damit ist eine Bedingung zum Entfernen der Bildinformation aus dem Sichtfeldanzeigegerät festgelegt. Die Sichtfeldanzeige wirkt dadurch für den Fahrer aufgeräumt.

Die Navigationsinformation kann in der Bildinformation als Symbol repräsentiert werden, wenn die Distanz kleiner als die erste Distanzschwelle wird. Das Symbol kann dem Ort überlagert werden. Das Symbol kann entsprechend einer Relativbewegung zwischen dem Fahrzeug und dem Ort dynamisch nachgeführt werden. Ein Symbol kann besonders einfach erfasst werden und ist insbesondere international verständlich.

Die Navigationsinformation kann in der Bildinformation als perspektivisch verzerrtes Symbol repräsentiert werden. Das verzerrte Symbol kann dem Ort überlagert werden. Das verzerrte Symbol kann entsprechend einer Relativbewegung zwischen dem Fahrzeug und dem Ort verzerrt werden. Das Verzerren der Bildinformation kann zu einer natürlicheren Darstellung der Navigationsinformation führen.

Die Navigationsinformation kann in der Bildinformation als Symbol repräsentiert werden, wenn die Distanz kleiner als die zweite Distanzschwelle wird. Das Symbol kann an einer vordefinierten Position in einem Darstellungsbereich des Sichtfeldanzeigegeräts angeordnet werden. Unterhalb der zweiten Distanzschwelle kann das Symbol in Anlehnung an die Verzerrung oberhalb der zweiten Distanzschwelle oder auch unverzerrt dargestellt werden. Dadurch kann eine natürliche Anmutung der Navigationsinformation erreicht werden. Somit kann ein winkelanaloges Symbol verzerrt dargestellt werden, wobei der Wechsel durch eine animierte Bewegung des kontaktanalogen Symbols, beispielsweise von der Kreuzungsmitte zu einer Position vor dem Fahrzeug erfolgt. Dabei streckt sich beispielsweise ein Pfeil. Die Perspektive (und damit die Verzerrung) kann dabei gleich bleiben.

Die Bildinformation kann abhängig von einer Relevanz für eine aktuelle Fahrsituation unterschiedlich groß dargestellt werden. Dadurch können wichtige Informationen sicher und schnell erfasst werden, während weniger wichtige Informationen das Sichtfeldanzeigegerät nicht überladen.

Die Navigationsinformation kann abhängig von einer Augenposition eines Fahrzeuglenkers und alternativ oder ergänzend einer Trajektorie des Fahrzeugs in der Bildinformation repräsentiert werden. Der Fahrzeuglenker kann als Fahrer bezeichnet werden. Durch eine dynamische Positionierung der Navigationsinformation kann der kontaktanaloge Effekt noch verstärkt werden.

Die Navigationsinformation kann in Abhängigkeit von einer Ausrichtung des Fahrzeugs im Raum in der Bildinformation repräsentiert werden. Die Navigationsinformation kann beispielsweise bei einer Schräglage des Fahrzeugs am Horizont ausgerichtet werden.

Die Navigationsinformation kann in Unabhängigkeit von der Ausrichtung des Fahrzeugs im Raum in der Bildinformation repräsentiert werden, wenn die Distanz kleiner als die zweite Distanzschwelle wird. An der festen Position im Darstellungsbereich kann die Information mit dem Fahrzeug verkippt dargestellt werden, um eine geringe Ablenkung des Fahrers zu erreichen.

Weiterhin wird eine Vorrichtung zum Betreiben eines Sichtfeldanzeigegeräts für ein Fahrzeug vorgestellt, wobei die Vorrichtung die folgenden Merkmale aufweist:
eine Einrichtung zum Ermitteln einer Distanz zwischen dem Fahrzeug und einem Ort zum Darstellen einer Navigationsinformation in einem Umfeld des Fahrzeugs;
eine Einrichtung zum Erzeugen einer Bildinformation für das Sichtfeldanzeigegerät unter Verwendung der Navigationsinformation und der Distanz, wobei die Navigationsinformation in der Bildinformation kontaktanalog repräsentiert wird, wenn die Distanz kleiner als eine erste Distanzschwelle wird, und die Navigationsinformation in der Bildinformation winkelanalog repräsentiert wird, wenn die Distanz kleiner als eine zweite Distanzschwelle wird,
wobei bei der kontaktanalogen Darstellung die Navigationsinformation entsprechend dem Ort zum Darstellen der Navigationsinformation nachgeführt wird, sodass die Bildinformation für einen Fahrer des Fahrzeugs ein fester Bestandteil des Umfelds des Fahrzeugs ist und bei der winkelanalogen Darstellung die Navigationsinformation an einer vordefinierten Position in einem Darstellungsbereich des Sichtfeldanzeigegerätes angeordnet ist, und
die Navigationsinformation in der Bildinformation aus dem Sichtfeldanzeigegerät entfernt wird, wenn die Distanz größer als eine dritte Distanzschwelle wird,
wobei die erste Distanzschwelle größer als die dritte Distanzschwelle ist, und die dritte Distanzschwelle größer als die zweite Distanzschwelle ist; und
eine Einrichtung zum Bereitstellen der Bildinformation für das Sichtfeldanzeigegerät.

Auch durch diese Ausführungsvariante der Erfindung in Form eines Steuergeräts kann die der Erfindung zugrunde liegende Aufgabe schnell und effizient gelöst werden.

Unter einer Vorrichtung, beispielsweise in Form eines Steuergeräts, kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Der hier vorgestellte Ansatz wird nachstehend anhand der beigefügten Zeichnungen beispielhaft näher erläutert. Es zeigen:
Fig. 1 eine Prinzipskizze einer kontaktanalogen Darstellung in einem Sichtfeldanzeigegerät;
Fig. 2 eine Darstellung eines Darstellungsbereichs eines Sichtfeldanzeigegeräts mit einer Navigationsinformation in kontaktanaloger Darstellung gemäß einem Ausführungsbeispiel der vorliegenden Erfindung;
Fig. 3 eine Darstellung einer Koordinatentransformation zwischen einem GPS-Koordinatensystem und einem Fahrzeugkoordinatensystem;
Fig. 4 ein Ablaufdiagramm einer Bildgenerierung für eine kontaktanaloge Darstellung auf einem Sichtfeldanzeigegerät;
Fig. 5 eine Darstellung eines Orts zum Darstellen einer Navigationsinformation gemäß einem Ausführungsbeispiel der vorliegenden Erfindung;
Fig. 6 eine Darstellung eines Wechsels zwischen einer kontaktanalogen Darstellung und einer winkelanalogen Darstellung gemäß einem Ausführungsbeispiel der vorliegenden Erfindung;
Fig. 7 eine Darstellung eines Veränderns einer Navigationsinformation während einer Richtungsänderung gemäß einem Ausführungsbeispiel der vorliegenden Erfindung;
Fig. 8 eine Darstellung einer Navigationsinformation nach einer Richtungsänderung gemäß einem Ausführungsbeispiel der vorliegenden Erfindung;
Fig. 9 eine Darstellung von Abständen zu einem Ort zum Darstellen einer Navigationsinformation gemäß einem Ausführungsbeispiel der vorliegenden Erfindung;
Fig. 10 ein Flussdiagramm eines Verfahrens gemäß einem Ausführungsbeispiel der vorliegenden Erfindung;
Fig. 11 ein Blockschaltbild eines Steuergeräts zum Betreiben eines Sichtfeldanzeigegeräts gemäß einem Ausführungsbeispiel der vorliegenden Erfindung;
Fig. 12 eine Darstellung eines Steuergeräts zum Betreiben eines Sichtfeldanzeigegeräts in einem Gesamtsystem gemäß einem Ausführungsbeispiel der vorliegenden Erfindung; und
Fig. 13 ein Ablaufdiagramm eines Verfahrens zum Betreiben eines Sichtfeldanzeigegeräts gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

In den folgenden Beschreibungen von Ausführungsbeispielen repräsentiert die Abkürzung ACC eine dynamische Abstandsregelung und steht für Adaptive Cruise Control. AR steht für Augmented Reality beziehungsweise kontaktanaloge Darstellung und repräsentiert eine grafische Überlagerung der Realität durch zusätzliche, ergänzende Bildinformationen. Ein HUD ist ein Head-Up Display und kann als Projektionsdisplay beziehungsweise als Sichtfeldanzeige bezeichnet werden. Das FoV bezeichnet das Field of View beziehungsweise einen Darstellungsbereich und damit die Bildgröße eines Head-Up Displays.

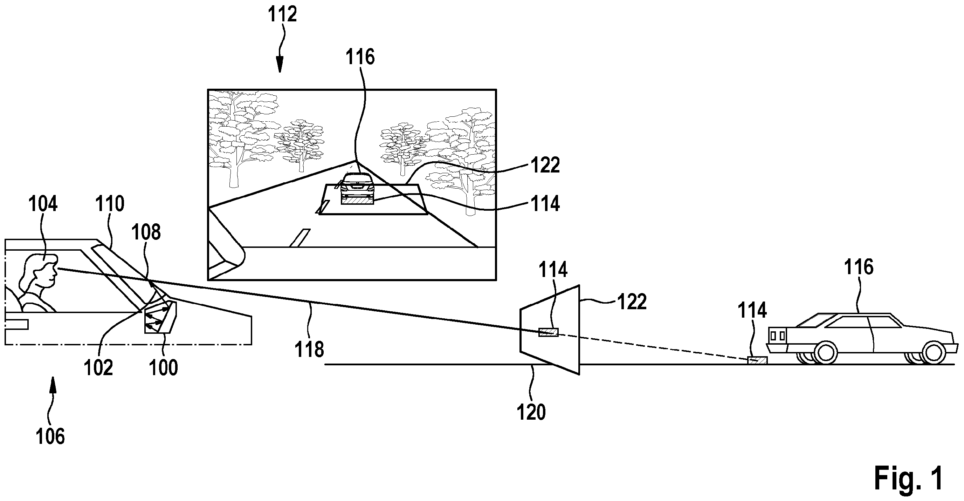

Fig. 1 zeigt eine Prinzipskizze einer kontaktanalogen Darstellung in einem Sichtfeldanzeigegerät 100. Durch das Sichtfeldanzeigegerät 100 wird eine Bildinformation 102 für einen Fahrer 104 eines Fahrzeugs 106 in einem Darstellungsbereich 108 des Sichtfeldanzeigegeräts 102 in eine Frontscheibe 110 des Fahrzeugs 106 eingeblendet. Der Fahrer 104 sieht die Bildinformation 102 zumindest teilweise seinem Sichtfeld 112 überlagert.

In diesem Beispiel wird eine Markierung 114 für ein vorausfahrendes Fahrzeug 116 als Bildinformation 102 in die Frontscheibe 110 eingeblendet. Die Markierung 114 wird hier so in dem Sichtfeld 112 angeordnet, dass die Markierung 114 hinter dem vorausfahrenden Fahrzeug 116 auf der Fahrbahn zu liegen scheint. Dabei wird die Markierung 114 innerhalb des Darstellungsbereichs 108 dynamisch positioniert. Die Markierung 114 wird entsprechend einer Augenposition des Fahrers 104 relativ zu dem Darstellungsbereich 108 positioniert. Zusätzlich wird die Markierung 114 entsprechend einer Relativposition des vorausfahrenden Fahrzeugs 116 zu dem Fahrzeug 106 positioniert.

In dem dargestellten Beispiel ist eine direkte Verbindungslinie 118 zwischen der Fahrbahn hinter dem vorausfahrenden Fahrzeug 116 und der Augenposition des Fahrers 104 eingezeichnet. Die Verbindungslinie 118 durchdringt die Frontscheibe 110 mit dem Darstellungsbereich 108. Zwischen der Frontscheibe 110 und dem vorausfahrenden Fahrzeug 116 ist eine Projektionsebene 120 des Sichtfeldanzeigegeräts 100 dargestellt. In der Projektionsebene 120 wird die Bildinformation 102 projiziert. In dieser Projektionsebene 120 ist ein virtuelles Abbild 122 des Darstellungsbereichs 108 gezeigt. Das Abbild der Markierung 114 in der Projektionsebene 120 wird von dem Fahrer 104 so weit vor dem Fahrzeug 106 gesehen, dass der Fahrer 104 gleichzeitig auf das vorausfahrende Fahrzeug 116 und die Markierung fokussieren kann. Dadurch werden die Augen des Fahrers 104 entlastet.

Als Head-up Display 100 wird ein System bezeichnet, das Informationen direkt ins Sichtfeld 112 des Fahrers 104 einblendet. Im Gegensatz dazu muss der Fahrer 104 bei einem Head-Down-Display oder bei den Kombiinstrumenten im Fahrzeug 106 seinen Blick senken, um wichtige Anzeigen wie etwa Geschwindigkeit oder Richtungsanweisungen zu sehen. Obwohl die Daten bei einem Head-up Display 100 direkt auf die Windschutzscheibe 110 projiziert werden, entsteht für den Fahrer 104 der Eindruck, als schwebe das Bild etwa zweieinhalb Meter von ihm entfernt über der Motorhaube. Dies hat den Vorteil, dass der Fahrer 104 den Blick nicht mehr vom Verkehrsgeschehen abwenden muss und der Umfang der Akkommodation geringer ausfällt. Head-up Displays 100 können Informationen in das direkte Sichtfeld des Fahrers 104 einblenden, um sie der Realität zu überlagern. Diese Displays 100 werden im allgemeinen Sprachgebrauch kontaktanaloge beziehungsweise augmented Head-up Displays 100 genannt. Dem Fahrer 104 können mithilfe dieser Technik z. B. Navigationshinweise gegeben werden, in dem die vor ihm liegende Straße bis zum Horizont farbig markiert wird oder Navigationshinweise, die als Pfeile die direkt auf der Fahrbahn liegen, angezeigt werden. Auch Fahrspuren oder vom ACC-System detektierte vorausfahrende Fahrzeuge 116 können dem Fahrer 104 direkt in das Blickfeld 112 eingeblendet werden.

Mit anderen Worten zeigt Fig. 1 eine Augmented Reality Visualization am Beispiel einer adaptive cruise Control. Dabei weist das Head up Display 100 eine monoskopische, kontaktanaloge Anzeige auf.

Der hier vorgestellte Ansatz beschreibt die Erzeugung der dreidimensionalen Daten in einem augmented Reality-Head up Display-System. Aufgrund von Bauraumbeschränkungen für das Head up Display 100 ist die Größe des Head up Display-Bilds 122 beschränkt. Die Bildgröße (Field of View, FoV) wird in Grad angegeben und liegt typischerweise bei ca. 5° x 3° (B x H). Kontaktanaloge Head up Displays können Öffnungswinkel von ca. 8° x 4° aufweisen, wobei die Oberkante des Bilds 122 in der Nähe des Horizonts liegt, um auch Objekte 114 in der Ferne darstellen zu können. Die Größe und Lage des Head up Display-Bilds 122 bestimmen direkt den Darstellungsbereich auf der Straße, auf dem Navigationspfeile und andere Informationen 114 kontaktanalog dargestellt werden können.

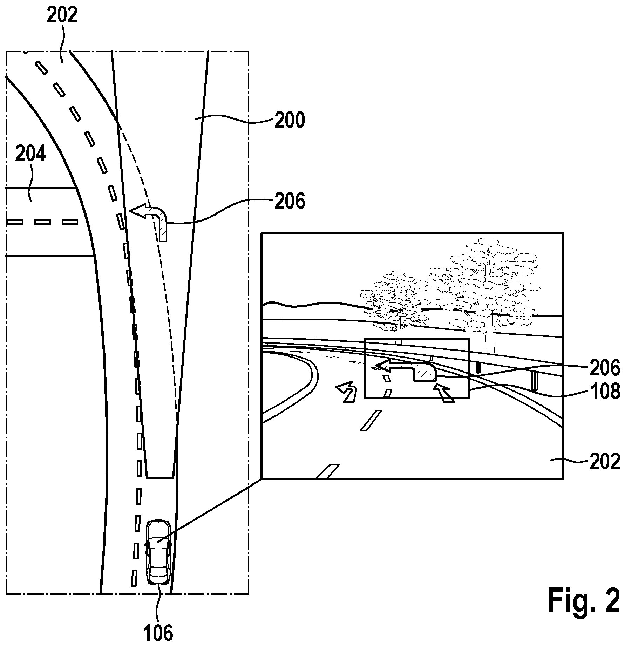

Fig. 2 zeigt eine Darstellung eines Projektionsbereichs 200 eines Sichtfeldanzeigegeräts mit einer Navigationsinformation in kontaktanaloger Darstellung gemäß einem Ausführungsbeispiel der vorliegenden Erfindung. Das Sichtfeldanzeigegerät ist wie in Fig. 1 in einem Fahrzeug 106 verbaut. Der Projektionsbereich 200 repräsentiert eine Projektion des Darstellungsbereichs 108 in der Frontscheibe des Fahrzeugs 106 in die Umgebung des Fahrzeugs 106. Das Fahrzeug 106 befindet sich auf einer Richtungsfahrbahn einer Straße 202. Die Straße 202 macht vor dem Fahrzeug 106 eine langgestreckte Linkskurve. In der Linkskurve befindet sich eine Einmündung einer weiteren Straße 204. Die weitere Straße 204 mündet von links in die Straße 202 ein.

Ein Navigationsgerät des Fahrzeugs 106 stellt eine Navigationsinformation für den Fahrer des Fahrzeugs 106 in Fahrersicht bereit. Die Navigationsinformation ist in diesem Ausführungsbeispiel ein Abbiegehinweis zum Abbiegen nach links in die weitere Straße 204. Der Abbiegehinweis wird durch einen nach links gekrümmten Pfeil 206 auf Höhe der Einmündung der weiteren Straße 204 repräsentiert. Der Pfeil 206 wird in dem Darstellungsbereich 108 als perspektivisch verzerrter Pfeil 206 dargestellt. Aufgrund der Projektion des Darstellungsbereichs 108 auf den Projektionsbereich 200 wird der Pfeil 206 kontaktanalog auf der Straße angezeigt. Dabei wirkt der Pfeil 206 aus der Sicht des Fahrers, als ob er flach auf der Straße 202 liegen würde. Der Pfeil 206 scheint direkt an einem Abbiegepunkt für das Fahrzeug 106 zu liegen.

Für die kontaktanaloge Darstellung von Navigationspfeilen 206 auf einem Kreuzungspunkt wird entsprechend der global positioning System (GPS)-Position des Navigationspfeiles 206 aus den Kartendaten und der GPS-Position des Fahrzeugs 106 die relative Position des Navigationspfeils 206 zum Fahrzeug 106 in dreidimensionalen Koordinaten berechnet.

Insbesondere bei der Darstellung von kontaktanalogen Navigationspfeilen 206 liegt die Projektion der Unterkante des Head up Display-Bilds 108 auf die Straße bei den beschriebenen Größenordnungen bei etwa zehn Metern vor dem Fahrzeug 106. Ein Navigationspfeil 206 kann deshalb nicht näher als etwa zehn Meter vor dem Fahrzeug 106 angezeigt werden. Diese Grenze wird sich aus geometrischen Gründen auch durch Vergrößerung der Bildhöhe nicht wesentlich ändern. Bei Annäherung an eine Kreuzung, auf der für den Fahrer ein kontaktanaloger Pfeil 206 dargestellt wird, wird folglich dieser Pfeil 206 verschwinden, sobald sich das Fahrzeug 106 der Kreuzung nähert und diese durchfährt. Das kann als sehr verwirrend empfunden werden. Weiterhin wird der Pfeil 206 in den seltensten Fällen genau auf der Kurvenlinie des Fahrers liegen, wodurch das Fahrzeug den Pfeil 206 in der Regel etwas seitlich passieren wird. Auch dabei kann es passieren, dass der Pfeil 206 aus dem Field of View 108 verschwindet. Diese Probleme werden durch den vorgeschlagenen Ansatz gelöst.

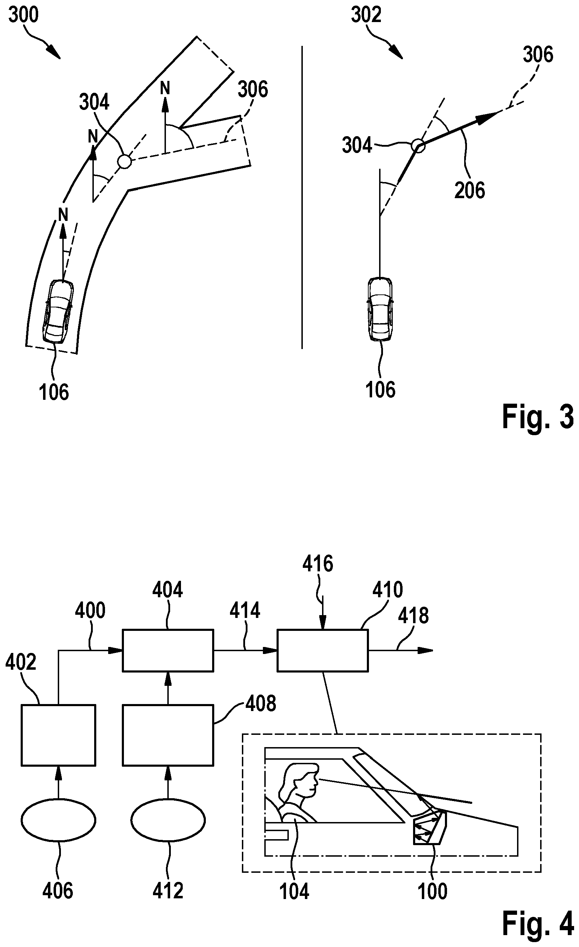

Fig. 3 zeigt ein Beispiel einer Koordinatentransformation zwischen einem GPS-Koordinatensystem 300 beziehungsweise einem Weltkoordinatensystem 300 und einem Fahrzeugkoordinatensystem 302. Die Koordinatentransformation erfolgt mit dem Ziel, eine Navigationsinformation kontaktanalog in einer Sichtfeldanzeige des Fahrzeugs 106 darstellen zu können, da die Sichtfeldanzeige fest mit dem Fahrzeug verbunden ist.

Das GPS-Koordinatensystem 300 bezieht sich auf einen globalen Koordinatenursprung. Die GPS-Position des Fahrzeugs 106 wird in geografischen Koordinaten ausgegeben. Die GPS-Position wird aus einer digitalen Karte ausgelesen. Die GPS-Position wird als geografische Länge und als geografische Breite beziehungsweise als östliche oder westliche Abweichung von einem Bezugsmeridian und als nördliche oder südliche Abweichung von einem Bezugsbreitenkreis ausgegeben. Zusätzlich wird eine Richtung als Winkel des Fahrzeugs 106 zu dem Meridian, auf dem es sich aktuell befindet, ausgegeben.

Das Fahrzeugkoordinatensystem 302 bezieht sich auf einen Koordinatenursprung des Fahrzeugs 106. Beispielsweise ist ein Schnittpunkt einer Y-Ebene, einer Z-Ebene und einer X-Ebene der Koordinatenursprung. Die Y-Ebene ist beispielsweise eine längs angeordnete Mittelebene des Fahrzeugs 106. Die Z-Ebene ist beispielsweise eine durch Radmittelpunkte des Fahrzeugs 106 aufgespannte Ebene. Die X-Ebene ist beispielsweise eine orthogonal zu der Y-Ebene und der Z-Ebene ausgerichtete Ebene durch die Radmittelpunkte der Vorderräder des Fahrzeugs 106.

Der Koordinatenursprung des Fahrzeugs 106 weist eine bekannte Position in dem GPS-Koordinatensystem 300 auf. Durch eine Koordinatentransformation können andere GPS-Positionen auf das Fahrzeugkoordinatensystem 302 umgerechnet werden.

Die GPS-Position des Fahrzeugs 106 ist im dargestellten Beispiel 52,1512 Grad nördliche Breite (lat) und 9,9490 Grad östliche Länge (Ion) bei einer Richtung (heading) von 15 Grad.

In dem dargestellten Beispiel ist in dem GPS-Koordinatensystem 300 eine GPS-Position 304 dargestellt, an der eine geplante Route 306 für das Fahrzeug 106 eine Richtungsänderung aufweist. Durch die Koordinatentransformation wird die GPS-Position 304 für einen Renderer des Fahrzeugs 106 bereitgestellt.

Die GPS-Position 304 ist im dargestellten Beispiel 52,1555 Grad nördliche Breite und 9,9418 Grad östliche Länge. An der GPS-Position 304 knickt die Route 306 von 45 Grad auf 80 Grad ab. (heading_in = 45°; heading_out = 80°)

Im Fahrzeugkoordinatensystem 302 ist die Fahrzeugposition im Ursprung des Koordinatensystems 302, also bei null. Die Position 304 für die Richtungsänderung liegt 50 Meter vor dem Fahrzeug und zwei Meter nach rechts versetzt. Der Knick in der Route 306 beträgt 35 Grad. Da die Route 306 vom Fahrzeug 106 aus gesehen unter einem Winkel von 30 Grad auf die Position 304 zuläuft, wird ein, die Richtungsänderung repräsentierender Pfeil 206 um 30 Grad verdreht an der Position 304 angeordnet, um die Route 306 an der Position 304 abzubilden. Der Pfeil 206 bildet dabei den Knick um 35 Grad ab.

Fig. 4 zeigt ein Ablaufdiagramm einer Bildgenerierung für eine kontaktanaloge Darstellung auf einem Sichtfeldanzeigegerät 100 (Head up Display, HUD). Für die Bildgenerierung werden dreidimensionale Daten 400 oder 3D Informationen 400, die dargestellt werden sollen, von einer Datenbasis 402 zu einem Renderer 404 übertragen. Die Daten 400 werden aus der Datenbasis 402 durch eine Systembedienung 406 ausgewählt. An den Renderer 404 werden ferner Informationen eines Trackers 408 übertragen. Der Tracker 408 berechnet eine Position und eine Ausrichtung eines Betrachters 104 des Sichtfeldanzeigegeräts 100 in der realen Welt. Weiterhin berechnet der Tracker 408 eine Position und eine Ausrichtung eines Combiners 410 des Sichtfeldanzeigegeräts 100 in der realen Welt. Der Combiner 410 kann als AR-Combiner 410 bezeichnet werden. Der Tracker 408 erhält Informationen von einer Sensorik 412. Die Sensorik 412 erfasst Bewegungen des Combiners 410 und des Betrachters 104. Der Renderer 404 erzeugt unter Verwendung der Informationen des Trackers 408 zweidimensionale Bilder 414 beziehungsweise Augmented Reality Bilder 414 aus den dreidimensionalen Daten 400. Die Bilder 414 werden auf den Combiner 410 projiziert. Durch den Combiner 410 werden die Bilder 414 mit einer Sicht 416 des Betrachters 104 auf die reale Welt überlagert. Dadurch sieht der Betrachter 104 eine Augmented Reality Sicht 418.

Mit anderen Worten ist in Fig. 4 ein augmented Reality-System 100 dargestellt, das das Head up Display 100 als Combiner verwendet. Auf diese Weise entsteht ein augmented Reality-Head up Display 100.

Ein dreidimensionaler-Effekt kann über verschiedene Ansätze erreicht werden. Beispielsweise werden über autostereoskopische oder binokulare Systeme für beide Augen unterschiedliche Bilder erzeugt und über entsprechende Optiken dem Auge sichtbar gemacht. Andere Verfahren (monokular) erzeugen nur ein einziges Bild, dessen Bildentfernung aber so gewählt wird, dass die Augen diese nicht mehr erkennen kann, und das Gehirn automatisch eine Zuordnung zu den hinter den eingeblendeten Symbolen liegenden Objekten vornimmt. Damit der Fahrer den Eindruck erhält, dass die Symbole an den Objekten "kleben" beziehungsweise auf der Straße liegen, werden die Eigenbewegungen des Fahrzeugs erfasst, die sonst in der Visualisierung sichtbar werden würden, da das Head up Display mit dem Fahrzeug verbunden ist, und bei der Einblendung der Symbole entsprechend berücksichtigt und kompensiert. Wenn das Fahrzeug also z. B. aufgrund eines Bremsvorgangs nickt, erscheint ein Navigationspfeil in einer kontaktanalogen Darstellung unverändert auf der Straße liegend.

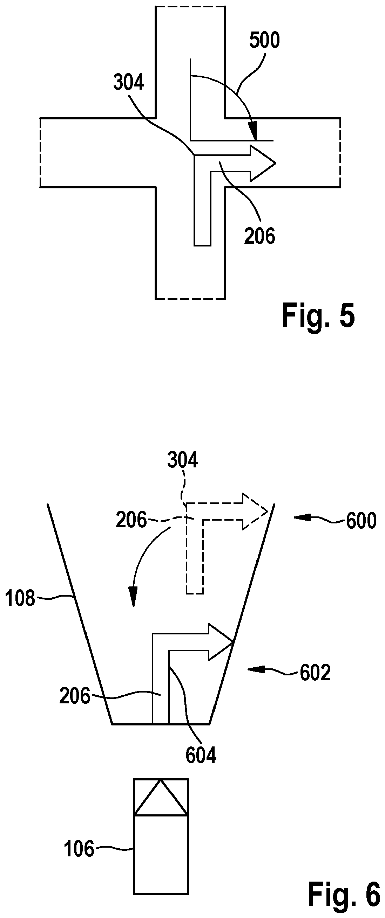

Fig. 5 zeigt eine Darstellung eines Orts 304 zum Darstellen einer Navigationsinformation 500 gemäß einem Ausführungsbeispiel der vorliegenden Erfindung. Der Ort 304 ist hier eine Kreuzung 304 zweier Straßen. Die Navigationsinformation 500 wird von einem Navigationsgerät eines Fahrzeugs bereitgestellt und ist in diesem Beispiel ein Abbiegehinweis zum Abbiegen an der Kreuzung 304. Wenn das Fahrzeug eine vorbestimmte Distanz zu der Kreuzung 304 unterschreitet, wird dem Fahrer des Fahrzeugs die Navigationsinformation 500 bereitgestellt. Die Navigationsinformation 500 wird hier durch einen abgewinkelten Pfeil 206 dargestellt. Der Pfeil 206 weist zwei Schenkel auf. Einer der Schenkel ist in Richtung des Fahrzeugs ausgerichtet. Der andere Schenkel weist in Richtung der geplanten Fahrtroute auf der Querstraße. Da die Straßen im Wesentlichen senkrecht zueinander ausgerichtet sind, stehen die Schenkel ebenfalls im Wesentlichen senkrecht zueinander. Der Pfeil 206 wird durch eine Sichtfeldanzeige in ein Blickfeld des Fahrers eingeblendet und der Kreuzung 304 überlagert dargestellt. Dabei wird der Pfeil 206 so dargestellt, dass er auch bei einer Bewegung des Fahrzeugs an der Kreuzung 304 verankert erscheint. Der Pfeil 206 wird kontaktanalog dargestellt.

In den Figuren 5 bis 9 ist beispielhaft eine Situation dargestellt, in der das Verfahren zum Einsatz kommt. In Fig. 5 nähert sich das nicht dargestellte Fahrzeug von Süden (unten) der Kreuzung 304. Laut Navigationssystem soll der Fahrer nach Osten (rechts) abbiegen. Dementsprechend wird ihm ein nach rechts zeigender Pfeil 206 auf der Kreuzung eingeblendet. Die Position 304 und Richtung des Pfeiles 206 in der realen Welt werden vom Navigationssystem geliefert und vom augmented Reality-System im Fahrzeug in eine relative Position umgerechnet.

Fig. 6 zeigt eine Darstellung eines Wechsels zwischen einer kontaktanalogen Darstellung 600 und einer winkelanalogen Darstellung 602 gemäß einem Ausführungsbeispiel der vorliegenden Erfindung. Es ist die Navigationsinformation wie in Fig. 5 dargestellt. Der abgewinkelte Pfeil 206 ist in der kontaktanalogen Darstellung 600 an der Kreuzung fixiert dargestellt. Da das Fahrzeug 106 sich auf die Kreuzung zu bewegt, nähert sich das Fahrzeug 106 auch an den Darstellungsort 304 des Pfeils 206 an. Dabei wird der Pfeil in der kontaktanalogen Darstellung 600 kontinuierlich innerhalb eines Darstellungsbereichs 108 des Sichtfeldanzeigegeräts bewegt. Wenn das Fahrzeug 106 näher als eine vorbestimmte Entfernung an die Kreuzung herangefahren ist, wird von der kontaktanalogen Darstellung 600 auf die winkelanaloge Darstellung 602 umgestellt. Der Pfeil 206 wird dann nicht mehr entsprechend dem Ort 304 der Kreuzung nachgeführt, sondern innerhalb des Darstellungsbereichs 108 auf einen vorbestimmten Platz 604 bewegt. An dem Platz 604 verbleibt der Pfeil 206 fixiert.

Der hier vorgestellte Ansatz beschreibt einen Wechsel zwischen einer kontaktanalogen 600 und einer winkelanalogen Darstellung 602 von Navigationspfeilen 206 basierend auf Entfernungsparametern.

Bei Annäherung an eine Kreuzung 304, auf der ein kontaktanaloger Navigationspfeil 206 dargestellt ist, wird bei Unterschreitung eines Minderstabstands zum Pfeil 206 dieser vor das Fahrzeug 106 "gezogen", wo er zunächst verbleibt und permanent in die Sollfahrtrichtung zeigt. Nach Durchfahrt der Kreuzung wird der Pfeil 206 ausgeblendet.

Der Pfeil 206 ist so permanent im Sichtfeld des Fahrers und unterstützt ihn auch bei der Durchfahrt des Manöverpunktes.

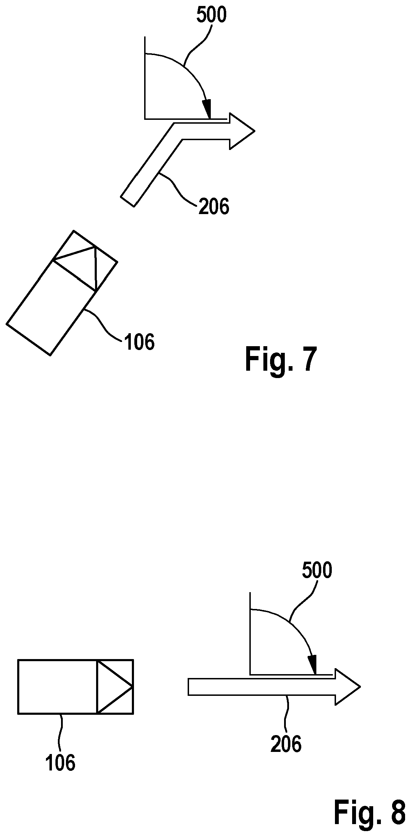

In einem Ausführungsbeispiel wird bei Annäherung an die Kreuzung 304 und Unterschreitung eines Mindestabstandes des Fahrzeugs 106 zum Pfeil 206 eine Animation ausgelöst, die den Pfeil 206 innerhalb des Field of View 108 beziehungsweise Darstellungsbereich 108 von der absoluten Position 600 auf der Kreuzung in eine neue relative Position 602 vor das Fahrzeug 106 zieht. Fig. 7 zeigt eine Darstellung eines Veränderns einer Navigationsinformation 500 während einer Richtungsänderung gemäß einem Ausführungsbeispiel der vorliegenden Erfindung. Die Navigationsinformation 500 wird wie in Fig. 5 durch einen nach rechts abgewinkelten Pfeil 206 repräsentiert. In diesem Beispiel ist das Fahrzeug 106 bereits teilweise um die Kurve gefahren beziehungsweise fährt gerade um die Kurve oder ist mitten in der Kurve. Damit hat das Fahrzeug 106 im Vergleich zu Fig. 6 seine Richtung geändert. Der eine Schenkel des Pfeils 206 weist weiterhin in Richtung der geplanten Route auf der Querstraße. Der zweite Schenkel weist jetzt in Richtung des Fahrzeugs 106. Damit beschreibt der Pfeil 206 einen stumpfen Winkel.

In einem Ausführungsbeispiel bleibt die Richtung, in die der Pfeil 206 zeigt, während der Kurvenfahrt des Fahrzeugs 106 konstant, sodass beim Durchfahren der Kurve der Fahrer immer einen Pfeil 206 vor dem Fahrzeug 106 sieht, der in die neue Sollrichtung (in diesem Fall nach Osten) zeigt. Hierfür verändert der Pfeil 206 seine Form. Der Pfeil 206 liegt immer vor dem Fahrzeug 106 und zeigt in die neue Himmelsrichtung.

Fig. 8 zeigt eine Darstellung einer Navigationsinformation 500 nach einer Richtungsänderung beziehungsweise bei Kurvenausfahrt gemäß einem Ausführungsbeispiel der vorliegenden Erfindung. Das Fahrzeug ist hier um die Kurve gefahren. Wie in Fig. 7 ist die Navigationsinformation 500 durch einen Pfeil 206 repräsentiert. Hier sind die zwei Schenkel des Pfeils 206 nicht mehr erkennbar. Jedoch weist weiterhin der eine Schenkel des Pfeils 206 in Richtung des Fahrzeugs 106, während der zweite Schenkel in Richtung der geplanten Route vor dem Fahrzeug 106 weist.

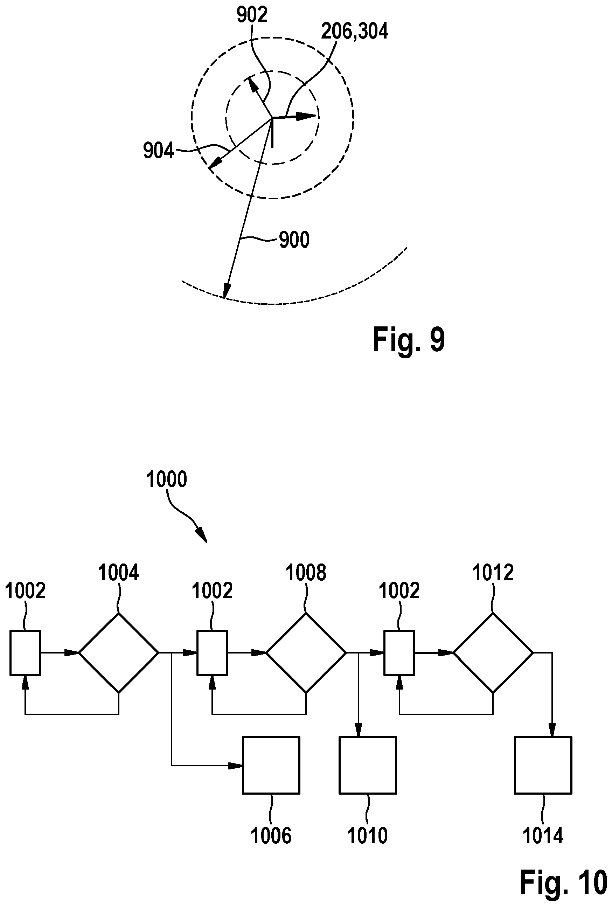

Fig. 9 zeigt eine Darstellung von Abständen 900, 902, 904 zu einem Ort 304 zum Darstellen einer Navigationsinformation gemäß einem Ausführungsbeispiel der vorliegenden Erfindung. Die Navigationsinformation ist wie in Fig. 5 durch einen abgewinkelten Pfeil 206 repräsentiert. Der Pfeil 206 ist an dem Ort 304 dargestellt. Die Abstände 900, 902, 904 sind bezogen auf den Ort 304. Die Abstände 900, 902, 904 bilden Kreisradien um den Ort 304 aus. Der erste Abstand 900 ist am größten. Der zweite Abstand 602 ist am kleinsten und der dritte Abstand 904 ist dazwischen. Wenn das Fahrzeug den ersten Abstand 900 unterschreitet, dann wird die Navigationsinformation durch den Pfeil 206 kontaktanalog im Sichtfeldanzeigegerät dargestellt. Wenn das Fahrzeug 106 den zweiten Abstand 902 unterschreitet, wird der Pfeil 206 winkelanalog im Sichtfeldanzeigegerät dargestellt. Wenn das Fahrzeug den Ort 304 hinter sich lässt und den dritten Abstand überschreitet, wird der Pfeil 206 aus dem Sichtfeldanzeigegerät entfernt.

Fig. 10 zeigt ein Flussdiagramm eines Ablaufs 1000 gemäß einem Ausführungsbeispiel der vorliegenden Erfindung. Der Ablauf 1000 wird insbesondere in einem fahrenden Fahrzeug ausgeführt. Der Ablauf 1000 beginnt mit einer ersten Operation 1002 "Entfernungsbestimmung". Dabei wird die Entfernung beziehungsweise der Abstand oder die Distanz zwischen dem Fahrzeug und einem Ort zum Darstellen einer Navigationsinformation bestimmt. Auf die Entfernungsbestimmung 1002 folgt eine erste Entscheidung 1004. Dabei wird entschieden, ob die Entfernung den ersten Abstandswert, wie er in Fig. 9 dargestellt ist, unterschreitet. Wenn die Entfernung den ersten Abstandswert nicht unterschreitet, wird die Entfernungsbestimmung 1002 erneut aufgerufen und die Entfernung erneut bestimmt, ohne eine Aktion auszulösen. Wenn die Entfernung den ersten Abstandswert unterschreitet, wird die Entfernungsbestimmung 1002 erneut aufgerufen und eine zweite Operation 1006 ausgelöst, in der die Navigationsinformation kontaktanalog an dem Ort dargestellt wird. Nach der Entfernungsbestimmung 1002 folgt eine zweite Entscheidung 1008. Dabei wird entschieden, ob die Entfernung den zweiten Abstandswert, wie er in Fig. 9 dargestellt ist, unterschreitet. Wenn die Entfernung den zweiten Abstandswert nicht unterschreitet, wird die Entfernungsbestimmung 1002 erneut aufgerufen und die Entfernung erneut bestimmt, während die zweite Operation 1006 weiter ausgeführt wird. Wenn die Entfernung den zweiten Abstandswert unterschreitet, wird die Entfernungsbestimmung 1002 erneut aufgerufen und eine dritte Operation 1010 ausgelöst und die Navigationsinformation winkelanalog in der Sichtfeldanzeige dargestellt. Nach der Entfernungsbestimmung 1002 folgt eine dritte Entscheidung 1012. Dabei wird entschieden, ob die Entfernung den dritten Abstandswert, wie er in Fig. 9 dargestellt ist, überschreitet. Wenn die Entfernung den dritten Abstandswert nicht überschreitet, wird die Entfernungsbestimmung 1002 erneut aufgerufen und die Entfernung erneut bestimmt, während die dritte Operation 1010 weiter ausgeführt wird. Wenn die Entfernung den zweiten Abstandswert überschreitet, wird eine vierte Operation 1014 ausgelöst und die Navigationsinformation nicht mehr in der Sichtfeldanzeige dargestellt.

In Fig. 10 ist der Algorithmus 1000 zur Steuerung der Anzeige beschrieben. Es ist ein Regelalgorithmus 1000 zur Umschaltung zwischen den Darstellungen beschrieben. Im Block 1002 erfolgt die Berechnung des Abstands A zwischen dem Fahrzeug und der Position des Navigationspfeiles gemäß Navigationssystem. Insgesamt gibt es zwei Darstellungsmodi. Bei der kontaktanalogen Darstellung liegt der Pfeil auf der Kreuzung. Bei der winkelanalogen Darstellung "klebt" der Pfeil am Fahrzeug und zeigt in die neue Richtung. Zwischen diesen beiden Darstellungen wird durch einen Regler umgeschaltet. Zu diesem Zweck werden drei Abstände zwischen Fahrzeug und der Soll-Position des Pfeils in der realen Welt definiert. Bei einer Unterschreitung 1004 eines ersten Abstands wird der kontaktanaloge Pfeil erstmalig angezeigt 1006. Bei einer Unterschreitung 1008 eines zweiten Abstands erfolgt der Wechsel 1010 von der kontaktanalogen in die winkelanaloge Darstellung. Bei einem Überschreiten 1012 eines dritten Abstands nach Durchfahrt der Kurve wird der Pfeil wieder ausgeblendet 1014.

Bei Unterschreitung 1004 des ersten Abstands erfolgt eine permanente Darstellung 1006 eines kontaktanalogen Pfeils.

Bei Unterschreitung 1008 des zweiten Abstands erfolgt der Start 1010 einer Animation des Wechsels von der kontaktanalogen Darstellung zur winkelanalogen Darstellung.

Bei Überschreitung 1012 des dritten Abstands wird die Pfeildarstellung gestoppt 1014.

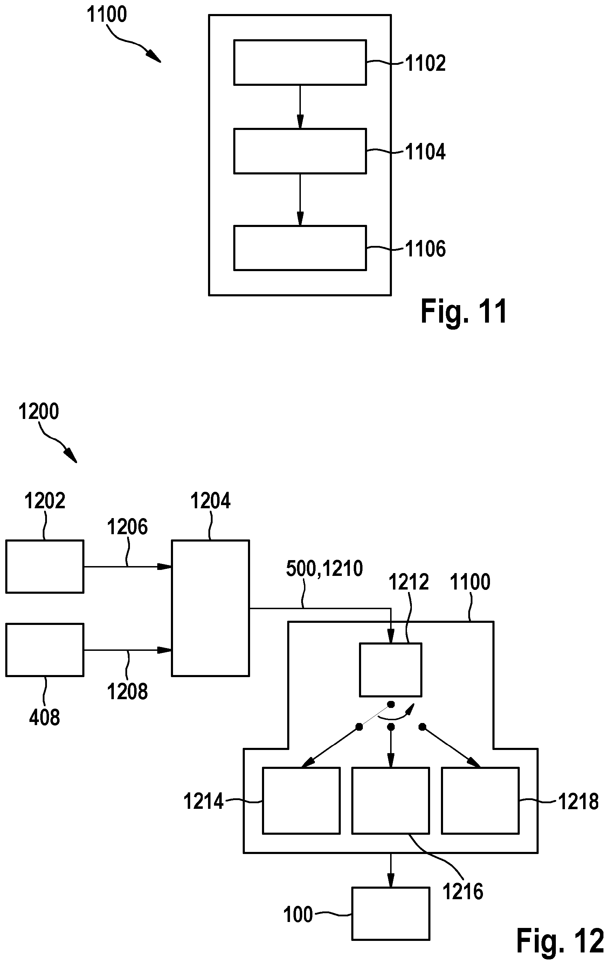

Fig. 11 zeigt ein Blockschaltbild eines Steuergeräts 1100 zum Betreiben eines Sichtfeldanzeigegeräts gemäß einem Ausführungsbeispiel der vorliegenden Erfindung. Das Sichtfeldanzeigegerät ist als Ausgabegerät für Informationen einer Fahrzeugelektronik eines Fahrzeugs ausgebildet. Das Steuergerät 1100 weist eine Einrichtung 1102 zum Ermitteln, eine Einrichtung 1104 zum Erzeugen und eine Einrichtung 1106 zum Bereitstellen auf. Die Einrichtung 1102 zum Ermitteln ist dazu ausgebildet, eine Distanz zwischen dem Fahrzeug und einem Ort zum Darstellen einer Navigationsinformation in einem Umfeld des Fahrzeugs zu ermitteln. Die Einrichtung 1104 zum Erzeugen ist dazu ausgebildet, eine Bildinformation für das Sichtfeldanzeigegerät unter Verwendung der Navigationsinformation und der Distanz zu erzeugen. Dabei wird die Navigationsinformation in der Bildinformation entweder kontaktanalog repräsentiert, wenn die Distanz kleiner als eine erste Distanzschwelle wird. Oder die Navigationsinformation wird in der Bildinformation winkelanalog repräsentiert, wenn die Distanz kleiner als eine zweite Distanzschwelle wird. Die Einrichtung 1106 zum Bereitstellen ist dazu ausgebildet, die Bildinformation für das Sichtfeldanzeigegerät bereitzustellen.

Fig. 12 zeigt eine Darstellung eines Steuergeräts 1100 zum Betreiben eines Sichtfeldanzeigegeräts 100 in einem Gesamtsystem 1200 gemäß einem Ausführungsbeispiel der vorliegenden Erfindung. Der hier dargestellte Teil des Gesamtsystems 1200 umfasst ein Navigationssystem 1202, eine Positionsschätzeinrichtung 408, eine Koordinatentransformationseinrichtung 1204, das Steuergerät 100 und das Sichtfeldanzeigegerät 100. Das Sichtfeldanzeigegerät umfasst hier einen Renderer. Das Navigationssystem 1202 ist dazu ausgebildet, Routenführungsdaten 1206 bereitzustellen. Die Routenführungsdaten 1206 umfassen eine darzustellende Pfeilrichtung eines Navigationspfeils sowie eine Position des Navigationspfeils in der Umwelt. Die Positionsschätzeinrichtung 408 ist dazu ausgebildet, Positionsdaten 1208 des Fahrzeugs und Richtungsdaten 1206 des Fahrzeugs bereitzustellen. Die Positionsschätzeinrichtung 408 kann als Tracker bezeichnet werden. Die Koordinatentransformationseinrichtung 1204 ist dazu ausgebildet, die Routenführungsdaten 1206 und die Positions- und Richtungsdaten 1208 einzulesen und die Pfeilposition und Pfeilrichtung in Fahrzeugkoordinaten umzurechnen. Die Koordinatentransformationseinrichtung 1204 gibt eine Pfeilposition und Pfeilrichtung 1210 relativ zum Fahrzeug als Navigationsinformation 500 aus. In dem Steuergerät 1100 gemäß dem hier vorgestellten Ansatz wird wie in Fig. 11 beschrieben die Navigationsinformation 500 eingelesen und die Bilder der Navigationspfeile erzeugt. Abhängig von einem Abstand des Darstellungsorts der Navigationsinformation 500 zum Fahrzeug werden verschiedene Darstellungsarten für die Navigationsinformation 500 ausgewählt. Dazu weist das Steuergerät 1100 hier eine Einrichtung 1212 zum Auswählen als Regler beziehungsweise Umschalter auf. Im hier dargestellten Ausführungsbeispiel weist das Steuergerät 1100 für die Darstellungsarten getrennte Darstellungseinrichtungen 1214, 1216, 1218 auf. Dabei ist die erste Darstellungseinrichtung 1214 dazu ausgebildet, die kontaktanaloge Darstellung bereitzustellen. Die zweite Darstellungseinrichtung 1216 ist dazu ausgebildet, eine Animation zwischen der kontaktanalogen und der winkelanalogen Darstellung bereitzustellen. Die dritte Darstellungseinrichtung 1218 ist dazu ausgebildet, die winkelanaloge Darstellung bereitzustellen.

In Fig. 12 ist beispielhaft die Einbettung in das Gesamtsystem 1200 im Fahrzeug gezeigt. Die Algorithmen zur Positionsschätzung benutzen GPS und Odometrie. Alle Softwarekomponenten können auf der Head Unit ausgeführt werden.

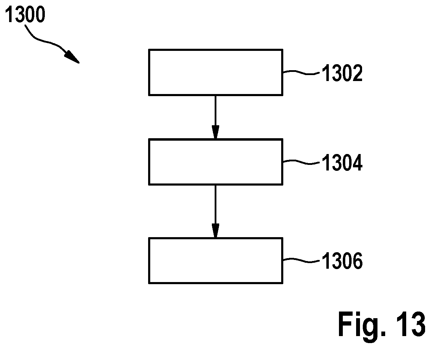

Fig. 13 zeigt ein Ablaufdiagramm eines Verfahrens 1300 zum Betreiben eines Sichtfeldanzeigegeräts für ein Fahrzeug gemäß einem Ausführungsbeispiel der vorliegenden Erfindung. Das Verfahren 1300 kann auf einem Steuergerät, wie es in den Figuren 11 und 12 dargestellt ist, ausgeführt werden. Das Verfahren 1300 weist einen Schritt 1302 des Ermittelns. Einen Schritt 1304 des Erzeugens und einen Schritt 1306 des Bereitstellens auf. Im Schritt 1302 des Ermittelns wird eine Distanz zwischen dem Fahrzeug und einem Ort zum Darstellen einer Navigationsinformation in einem Umfeld des Fahrzeugs ermittelt. Dabei bewegt sich das Fahrzeug auf den Ort zu. Die Distanz zu dem Ort nimmt ab. Im Schritt 1304 des Erzeugens wird eine Bildinformation für das Sichtfeldanzeigegerät unter Verwendung der Navigationsinformation und der Distanz erzeugt. Dabei wird die Navigationsinformation in der Bildinformation kontaktanalog repräsentiert, wenn die Distanz kleiner als eine erste Distanzschwelle wird. Die Navigationsinformation wird in der Bildinformation winkelanalog repräsentiert, wenn die Distanz kleiner als eine zweite Distanzschwelle wird. Im Schritt 1306 des Bereitstellens wird die Bildinformation für das Sichtfeldanzeigegerät bereitgestellt.

In einem Ausführungsbeispiel wird im Schritt 1304 des Erzeugens die Navigationsinformation in der Bildinformation nicht mehr repräsentiert, wenn die Distanz größer als eine dritte Distanzschwelle wird. Wenn das Fahrzeug über den Ort hinaus gefahren ist, der Ort also hinter dem Fahrzeug liegt, wird die Navigationsinformation ausgeblendet.

In einem Ausführungsbeispiel wird im Schritt 1304 des Erzeugens die Navigationsinformation in der Bildinformation als Symbol repräsentiert, wenn die Distanz kleiner als die erste Distanzschwelle wird. Dabei wird das Symbol dem Ort überlagert. Das Symbol wird der Realität überlagert. Beispielsweise erscheint ein Richtungspfeil auf der Fahrbahn vor dem Fahrzeug zu liegen.

In einem Ausführungsbeispiel wird im Schritt 1304 des Erzeugens das Symbol entsprechend einer Relativbewegung zwischen dem Fahrzeug und dem Ort dynamisch nachgeführt. Dabei erscheint das Symbol in der Umgebung stillzustehen, während das Fahrzeug sich auf das Symbol zubewegt.

In einem Ausführungsbeispiel wird im Schritt 1304 des Erzeugens die Navigationsinformation in der Bildinformation als perspektivisch verzerrtes Symbol repräsentiert. Das verzerrte Symbol wird dem Ort überlagert. Beim Verzerren wird ein Blickwinkel eines Fahrers des Fahrzeugs berücksichtigt. Dabei kann das Symbol beispielsweise analog zu Straßenmarkierungen, wie Abbiegepfeilen verzerrt werden.

In einem Ausführungsbeispiel wird im Schritt 1304 des Erzeugens das Symbol entsprechend der Relativbewegung zwischen dem Fahrzeug und dem Ort verzerrt.

In einem Ausführungsbeispiel wird im Schritt 1304 des Erzeugens die Navigationsinformation in der Bildinformation als Symbol repräsentiert, wenn die Distanz kleiner als die zweite Distanzschwelle wird. Dabei wird das Symbol an einer vordefinierten Position in einem Darstellungsbereich des Sichtfeldanzeigegeräts angeordnet. Das Symbol wird unabhängig von Fahrzeugbewegungen an der Position dargestellt. So ist eine vollständige Sichtbarkeit des Symbols sichergestellt.

In einem Ausführungsbeispiel wird im Schritt 1304 des Erzeugens die Navigationsinformation abhängig von einer Augenposition eines Fahrzeuglenkers in der Bildinformation repräsentiert. Die Augenposition bestimmt eine Blickrichtung des Fahrzeuglenkers auf seine Umwelt und damit auch auf den Darstellungsbereich des Sichtfeldanzeigegeräts. Um die Navigationsinformation einem Objekt in der Umwelt des Fahrzeugs zu überlagern, wird die Augenposition erfasst und beim Positionieren der Navigationsinformation in dem Darstellungsbereich berücksichtigt.

In einem Ausführungsbeispiel wird im Schritt 1304 des Erzeugens die Navigationsinformation abhängig von einer Trajektorie des Fahrzeugs in der Bildinformation repräsentiert. Die Trajektorie kann als Ausrichtung des Fahrzeugs im Raum beziehungsweise relativ zu seiner Umgebung verstanden werden. Damit beeinflusst die Trajektorie einen Winkel zwischen dem Fahrzeug und der Umgebung. Beim Überlagern der Navigationsinformation über die Umgebung wird daher die Trajektorie berücksichtigt.

In einem Ausführungsbeispiel wird die Navigationsinformation in Unabhängigkeit von der Ausrichtung des Fahrzeugs im Raum in der Bildinformation repräsentiert, wenn die Distanz kleiner als die zweite Distanzschwelle wird.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (1300) zum Betreiben eines Sichtfeldanzeigegeräts (100) für ein Fahrzeug (106), wobei das Verfahren (1300) die folgenden Schritte aufweist:
Ermitteln (1302) einer Distanz zwischen dem Fahrzeug (106) und einem Ort (304) zum Darstellen einer Navigationsinformation (500) in einem Umfeld des Fahrzeugs (106);
Erzeugen (1304) einer Bildinformation (206) für das Sichtfeldanzeigegerät (100) unter Verwendung der Navigationsinformation (500) und der Distanz, wobei die Navigationsinformation (500) in der Bildinformation (206) kontaktanalog (600) repräsentiert wird, wenn die Distanz kleiner als eine erste Distanzschwelle (900) wird, und die Navigationsinformation (500) in der Bildinformation (206) winkelanalog (602) repräsentiert wird, wenn die Distanz kleiner als eine zweite Distanzschwelle (902) wird, wobei bei der kontaktanalogen Darstellung die Navigationsinformation entsprechend dem Ort zum Darstellen der Navigationsinformation nachgeführt wird,
sodass die Bildinformation für einen Fahrer des Fahrzeugs ein fester Bestandteil des Umfelds des Fahrzeugs ist und bei der winkelanalogen Darstellung die Navigationsinformation an einer vordefinierten Position in einem Darstellungsbereich des Sichtfeldanzeigegerätes angeordnet ist,
und die Navigationsinformation (500) in der Bildinformation (206) aus dem Sichtfeldanzeigegerät (100) entfernt wird, wenn die Distanz größer als eine dritte Distanzschwelle (904) wird, wobei die erste Distanzschwelle (900) größer als die dritte Distanzschwelle (904) ist, und die dritte Distanzschwelle (904) größer als die zweite Distanzschwelle (902) ist; und
Bereitstellen (1306) der Bildinformation (206) für das Sichtfeldanzeigegerät (100).

2. Verfahren (1300) gemäß einem der vorangegangenen Ansprüche, bei dem im Schritt (1304) des Erzeugens die Navigationsinformation (500) in der Bildinformation (206) als Symbol (206) repräsentiert wird, wenn die Distanz kleiner als die erste Distanzschwelle (900) wird, wobei das Symbol (206) dem Ort (304) überlagert wird und/oder entsprechend einer Relativbewegung zwischen dem Fahrzeug (106) und dem Ort (304) dynamisch nachgeführt wird.

3. Verfahren (1300) gemäß Anspruch 2, bei dem im Schritt (1304) des Erzeugens die Navigationsinformation (500) in der Bildinformation (206) als perspektivisch verzerrtes Symbol (206) repräsentiert wird, wobei das verzerrte Symbol (206) dem Ort (304) überlagert wird und/oder entsprechend einer Relativbewegung zwischen dem Fahrzeug (106) und dem Ort (304) verzerrt wird.

4. Verfahren (1300) gemäß einem der vorangegangenen Ansprüche, bei dem im Schritt (1304) des Erzeugens die Navigationsinformation (500) in der Bildinformation (206) als Symbol (206) repräsentiert wird, wenn die Distanz kleiner als die zweite Distanzschwelle (902) wird, wobei das Symbol (206) an einer vordefinierten Position in einem Darstellungsbereich (108) des Sichtfeldanzeigegeräts (100) angeordnet wird.

5. Verfahren (1300) gemäß einem der vorhergehenden Ansprüche, bei dem im Schritt (1304) des Erzeugens die Navigationsinformation (500) abhängig von einer Augenposition eines Fahrzeuglenkers (104) und/oder einer Trajektorie (306) des Fahrzeugs (106) in der Bildinformation (206) repräsentiert wird.

6. Verfahren (1300) gemäß einem der vorangegangenen Ansprüche, bei dem im Schritt (1304) des Erzeugens die Navigationsinformation (500) in Abhängigkeit von einer Ausrichtung des Fahrzeugs (106) im Raum in der Bildinformation (206) repräsentiert wird.

7. Verfahren (1300) gemäß Anspruch 6, bei dem die Navigationsinformation (500) in Unabhängigkeit von der Ausrichtung des Fahrzeugs (106) im Raum in der Bildinformation (206) repräsentiert wird, wenn die Distanz kleiner als die zweite Distanzschwelle (902) wird.

8. Vorrichtung (110) zum Betreiben eines Sichtfeldanzeigegeräts (100) für ein Fahrzeug (106), wobei die Vorrichtung (1100) die folgenden Merkmale aufweist:
eine Einrichtung (1102) zum Ermitteln einer Distanz zwischen dem Fahrzeug (106) und einem Ort (304) zum Darstellen einer Navigationsinformation (500) in einem Umfeld des Fahrzeugs (106);
eine Einrichtung (1104) zum Erzeugen einer Bildinformation (206) für das Sichtfeldanzeigegerät (100) unter Verwendung der Navigationsinformation (500) und der Distanz, wobei die Navigationsinformation (500) in der Bildinformation (206) kontaktanalog repräsentiert wird, wenn die Distanz kleiner als eine erste Distanzschwelle (900) wird,
und die Navigationsinformation (500) in der Bildinformation (206) winkelanalog repräsentiert wird, wenn die Distanz kleiner als eine zweite Distanzschwelle (902) wird, wobei bei der kontaktanalogen Darstellung die Navigationsinformation entsprechend dem Ort zum Darstellen der Navigationsinformation nachgeführt wird, sodass die Bildinformation für einen Fahrer des Fahrzeugs ein fester Bestandteil des Umfelds des Fahrzeugs ist und bei der winkelanalogen Darstellung die Navigationsinformation an einer vordefinierten Position in einem Darstellungsbereich des Sichtfeldanzeigegerätes angeordnet ist, und die Navigationsinformation (500) in der Bildinformation (206) aus dem Sichtfeldanzeigegerät (100) entfernt wird,
wenn die Distanz größer als eine dritte Distanzschwelle (904) wird, wobei die erste Distanzschwelle (900) größer als die dritte Distanzschwelle (904) ist, und die dritte Distanzschwelle (904) größer als die zweite Distanzschwelle (902) ist; und
eine Einrichtung (1106) zum Bereitstellen der Bildinformation (206) für das Sichtfeldanzeigegerät (100).

9. Computer-Programmprodukt mit Programmcode zur Durchführung des Verfahrens nach einem der Ansprüche 1 bis 7, wenn das Programmprodukt auf einer Vorrichtung nach Anspruch 8 ausgeführt wird.

## Claims

1. Method (1300) for operating a field of view display device (100) for a vehicle (106), the method (1300) having the following steps of:
determining (1302) a distance between the vehicle (106) and a location (304) for displaying an item of navigation information (500) in an environment of the vehicle (106);
generating (1304) an item of image information (206) for the field of view display device (100) using the navigation information (500) and the distance, the navigation information (500) being represented in the image information (206) in a contact-analogue manner (600) if the distance becomes smaller than a first distance threshold (900), and the navigation information (500) being represented in the image information (206) in an angle-analogue manner (602) if the distance becomes smaller than a second distance threshold (902), the navigation information being tracked according to the location for displaying the navigation information in the case of the contact-analogue display, with the result that the image information is a fixed part of the environment of the vehicle for a driver of the vehicle, and the navigation information being arranged at a predefined position in a display area of the field of view display device in the case of the angle-analogue display, and the navigation information (500) in the image information (206) being removed from the field of view display device (100) if the distance becomes greater than a third distance threshold (904), the first distance threshold (900) being greater than the third distance threshold (904), and the third distance threshold (904) being greater than the second distance threshold (902); and
providing (1306) the image information (206) for the field of view display device (100).

2. Method (1300) according to one of the preceding claims, in which, in the generating step (1304), the navigation information (500) is represented in the image information (206) as a symbol (206) if the distance becomes smaller than the first distance threshold (900), the symbol (206) being superimposed on the location (304) and/or being dynamically tracked according to a relative movement between the vehicle (106) and the location (304).

3. Method (1300) according to Claim 2, in which, in the generating step (1304), the navigation information (500) is represented in the image information (206) as a perspectively distorted symbol (206), the distorted symbol (206) being superimposed on the location (304) and/or being distorted according to a relative movement between the vehicle (106) and the location (304).

4. Method (1300) according to one of the preceding claims, in which, in the generating step (1304), the navigation information (500) is represented in the image information (206) as a symbol (206) if the distance becomes smaller than the second distance threshold (902), the symbol (206) being arranged at a predefined position in a display area (108) of the field of view display device (100).

5. Method (1300) according to one of the preceding claims, in which, in the generating step (1304), the navigation information (500) is represented in the image information (206) on the basis of an eye position of a vehicle driver (104) and/or a trajectory (306) of the vehicle (106).

6. Method (1300) according to one of the preceding claims, in which, in the generating step (1304), the navigation information (500) is represented in the image information (206) on the basis of an orientation of the vehicle (106) in space.

7. Method (1300) according to Claim 6, in which the navigation information (500) is represented in the image information (206) independently of the orientation of the vehicle (106) in space if the distance becomes smaller than the second distance threshold (902).

8. Apparatus (110) for operating a field of view display device (100) for a vehicle (106), the apparatus (1100) having the following features:
a device (1102) for determining a distance between the vehicle (106) and a location (304) for displaying an item of navigation information (500) in an environment of the vehicle (106);
a device (1104) for generating an item of image information (206) for the field of view display device (100) using the navigation information (500) and the distance, the navigation information (500) being represented in the image information (206) in a contact-analogue manner if the distance becomes smaller than a first distance threshold (900), and the navigation information (500) being represented in the image information (206) in an angle-analogue manner if the distance becomes smaller than a second distance threshold (902), the navigation information being tracked according to the location for displaying the navigation information in the case of the contact-analogue display, with the result that the image information is a fixed part of the environment of the vehicle for a driver of the vehicle, and the navigation information being arranged at a predefined position in a display area of the field of view display device in the case of the angle-analogue display, and the navigation information (500) in the image information (206) being removed from the field of view display device (100) if the distance becomes greater than a third distance threshold (904), the first distance threshold (900) being greater than the third distance threshold (904), and the third distance threshold (904) being greater than the second distance threshold (902); and
a device (1106) for providing the image information (206) for the field of view display device (100).

9. Computer program product having program code for carrying out the method according to one of Claims 1 to 7 when the program product is executed on an apparatus according to Claim 8.

## Revendications

1. Procédé (1300) de mise en fonctionnement d'un appareil d'affichage du champ de vision (100) pour un véhicule (106), dans lequel le procédé (1300) comprend les étapes consistant à :
déterminer (1302) une distance entre le véhicule (106) et un emplacement (304) d'affichage d'une information de navigation (500) dans un environnement du véhicule (106) ;
générer (1304) une information d'image (206) pour l'appareil d'affichage du champ de vision (100) en utilisant l'information de navigation (500) et la distance, dans lequel l'information de navigation (500) est représentée dans l'information d'image (206) de manière analogue à un contact (600) lorsque la distance devient inférieure à un premier seuil de distance (900),
et l'information de navigation (500) contenue est représentée dans l'information d'image (206) de manière analogue à un angle (602) lorsque la distance est inférieure à un deuxième seuil de distance (902), dans lequel, dans le cas d'un affichage analogue à un contact,
l'information de navigation est mise à jour d'une manière qui correspond à l'emplacement d'affichage de l'information de navigation, de manière à ce que, pour un conducteur du véhicule, l'information d'image fasse partie intégrante de l'environnement du véhicule et, dans le cas d'un affichage analogue à un angle, l'information de navigation est disposée à une position prédéfinie dans une zone de représentation de l'appareil d'affichage du champ de vision, et l'information de navigation (500) contenue dans l'information d'image (206) est éliminée de l'appareil d'affichage du champ de vision (100) lorsque la distance est supérieure à un troisième seuil de distance (904), dans lequel le premier seuil de distance (900) est supérieur au troisième seuil de distance (904) et le troisième seuil de distance (904) est supérieur au deuxième seuil de distance (902) ; et fournir (1306) l'information d'image (206) destinée à l'appareil d'affichage du champ de vision (100).

2. Procédé (1300) selon l'une des revendications précédentes, dans lequel, lors de l'étape (1304) de génération, l'information de navigation (500) est représentée dans l'information d'image (206) sous la forme d'un symbole (206) lorsque la distance devient inférieure au premier seuil de distance (900), dans lequel le symbole (206) est superposé à l'emplacement (304) et/ou mis à jour dynamiquement d'une manière qui correspond à un mouvement relatif entre le véhicule (106) et l'emplacement (304).

3. Procédé (1300) selon la revendication 2, dans lequel, lors de l'étape (1304) de génération, l'information de navigation (500) est représentée dans l'information d'image (206) sous la forme d'un symbole (206) déformé en perspective, dans lequel le symbole (206) déformé en perspective est superposé à l'emplacement (304) et/ou déformé d'une manière qui correspond à un mouvement relatif entre le véhicule (106) et l'emplacement (304).

4. Procédé (1300) selon l'une des revendications précédentes, dans lequel, lors de l'étape (1304) de génération, l'information de navigation (500) est représentée dans l'information d'image (206) sous la forme d'un symbole (206) lorsque la distance devient inférieure au deuxième seuil de distance (902), dans lequel le symbole (206) est disposé à une position prédéfinie dans une zone d'affichage (101) de l'appareil d'affichage du champ de vision (100).

5. Procédé (1300) selon l'une des revendications précédentes, dans lequel, lors de l'étape de génération (1304), l'information de navigation (500) est représentée dans l'information d'image (206) en fonction de l'emplacement oculaire d'un conducteur de véhicule (104) et/ou d'une trajectoire (306) du véhicule (106).

6. Procédé (1300) selon l'une des revendications précédentes, dans lequel, lors de l'étape (1304) de génération, l'information de navigation (500) est représentée dans l'information d'image (206) en fonction d'une orientation du véhicule (106) dans l'espace.

7. Procédé (1300) selon la revendication 6, dans lequel l'information de navigation (500) est représentée dans l'information d'image (206) indépendamment de l'orientation du véhicule (106) dans l'espace lorsque la distance est inférieure au deuxième seuil de distance (902) .

8. Dispositif (110) de mise en fonctionnement d'un appareil d'affichage du champ de vision (100) pour un véhicule (106), dans lequel le dispositif (1100) présente les caractéristiques suivantes :
un moyen (1102) destiné à déterminer une distance entre le véhicule et un emplacement (304) d'affichage d'une information de navigation (500) dans un environnement du véhicule (106) ;
un moyen (1104) destiné à générer une information d'image (206) pour l'appareil d'affichage du champ de vision (100) en utilisant l'information de navigation (500) et la distance, dans lequel l'information de navigation (500) est représentée dans l'information d'image (206) de manière analogue à un contact lorsque la distance est inférieure à un premier seuil de distance (900), et l'information de navigation (500) est représentée dans l'information d'image (206) de manière analogue à un angle lorsque la distance est inférieure à un deuxième seuil de distance (902), dans lequel, dans le cas d'un affichage analogue à un contact, l'information de navigation est mise à jour d'une manière qui correspond à l'emplacement d'affichage de l'information de navigation, de manière à ce que, pour un conducteur du véhicule, l'information d'image fasse partie intégrante de l'environnement du véhicule et, dans le cas d'un affichage analogue à un angle, l'information de navigation est disposée à une position prédéfinie dans une zone de représentation de l'appareil d'affichage du champ de vision, et l'information de navigation (500) contenue dans l'information d'image (206) est éliminée de l'appareil d'affichage du champ de vision (100) lorsque la distance est supérieure à un troisième seuil de distance (904), dans lequel le premier seuil de distance (900) est supérieur au troisième seuil de distance (904) et le troisième seuil de distance (904) est supérieur au deuxième seuil de distance (902) ; et un moyen (1106) pour fournir l'information d'image (206) destinée à l'appareil d'affichage du champ de vision (100).

9. Produit de programme d'ordinateur comportant un code de programme destiné mettre en oeuvre le procédé selon l'une des revendications 1 à 7 lorsque le produit de programme est exécuté sur un dispositif selon la revendication 8.
